# EUROPEAN PATENT SPECIFICATION

(11) **EP 4 441 258 B1**
(45) Date of publication and mention of the grant of the patent: **21.05.2025**
(21) Application number: 22822974.6
(22) Date of filing: 29.11.2022
(51) Int. Cl.: C22B 3/06, C22B 3/46, C22B 15/00, C22B 1/02, C22B 3/00, H01M 10/54

(54) **A METHOD FOR IRON AND COPPER REMOVAL FROM SOLUTION USING METALLIC REAGENTS**
VERFAHREN ZUR EISEN- UND KUPFERBESEITIGUNG AUS EINER LÖSUNG UNTER VERWENDUNG VON METALLISCHEN REAGENZIEN
PROCÉDÉ D'ÉLIMINATION DE FER ET DE CUIVRE DANS UNE SOLUTION À L'AIDE DE RÉACTIFS MÉTALLIQUES

(30) Priority: 30.11.2021 EP 21211405
(43) Date of publication of application: 09.10.2024
(73) Proprietor: Umicore, 1000 Brussels (BE)
(72) Inventor: KLAASEN, Bart, 2250 Olen (BE)
(86) International application number: PCT/EP2022/083560
(87) International publication number: WO 2023/099424

(56) References cited:
- GB-A- 2 011 476
- US-A- 4 124 462
- ISO: "ISO 3252:2019 Powder metallurgy - Vocabulary", 1 August 2019 (2019-08-01), pages 1 - 34, XP009531189, Retrieved from the Internet <URL:https://www.iso.org/standard/69828.html>
- HABASHI FATHI: "Metal Powders by Hydrometallurgical Route - a Review", INTERCERAM, vol. 5, 31 May 2010 (2010-05-31), pages 287 - 297, XP093022299
- MACKINNON D J: "Recovery of copper by cementation on nickel powder", CANADIAN METALLURGICAL QUARTERLY, vol. 13, no. 3, 30 September 1974 (1974-09-30), pages 473 - 477, XP055917928
- WANG HONGGANG ET AL: "Development of a Highly Efficient Hydrometallurgical Recycling Process for Automotive Li-Ion Batteries", vol. 1, no. 2, 1 April 2015 (2015-04-01), DE, pages 168 - 178, XP055857351, ISSN: 2199-3823, Retrieved from the Internet <URL:https://link.springer.com/content/pdf/10.1007/s40831-015-0016-6.pdf> DOI: 10.1007/s40831-015-0016-6

## Description

The invention concerns the field of hydrometallurgy and describes a process for purifying an acidic solution containing different metals via an oxidative hydrolysis with metallic reagents.

Many cobalt and nickel containing raw materials and intermediates also contain quantities of iron and copper that end up in leaching solutions after dissolving these materials. Examples are, among others, mattes from primary smelting of ores, intermediate hydroxide and sulfide products from Cu, Co and Ni mining, certain metallic deep-sea nodules containing Co, Ni and Mn, white alloys produced during smelting of Co and Ni products, as well as wastes and scraps generated during production or use of lithium-ion or nickel metal hydride batteries.

The removal of iron and copper from aqueous solutions containing cobalt, nickel and other metals is therefore a frequent hydrometallurgical operation. Purification is often done in two separate unit operations, one focusing on removing the bulk of copper from solution, and another for removing iron from solution.

In many hydrometallurgical schemes, Cu extraction from Ni and Co bearing solutions is based on electrowinning. C. G. Anderson (Book chapter: Optimization of Industrial Copper Electrowinning Solutions. In: Prime Archives in Chemical Engineering. Hyderabad, India: Vide Leaf. 2019) describes electrowinning of Cu directly on Cu and Ni containing industrial solutions ("direct electrowinning"), with cathodes that are immersed into the solution. By applying an electrical current, Cu is deposited on the cathode, separating it from other elements in solution, such as Co, Ni, Fe or Mn. Large amounts of Cu may require multiple passes, recycling the solution over a single cell. An alternative to this setup is a series of electrowinning cells in cascade, each operating at a decreasing Cu concentration. Cells for electrowinning can have different designs. Cells with flat parallel electrodes are the most widely used. WO2020078779 proposes the use of particulate cathodes for Cu direct electrowinning from Co, Ni and Mn containing solutions, while Siegmund et al. (Replacement of liberator cells - pilot test study at Aurubis Hamburg using the EMEW technology: Proceedings of Copper 2013: Santiago, Chile, 1-4 Dec. 2013: Volume V, p. 275-283) describe the use of cylindrical cells for selective removal of Cu from Ni containing solutions.

In other cases, electrowinning is combined with solvent extraction ("SX-electrowinning"). Examples are found in Cheng et al. (The recovery of nickel and cobalt from leach solutions by solvent extraction: Process overview, recent research and development; Proceedings of ISEC 2005). In such a scheme, Cu is first extracted from an impure feed solution by solvent extraction (SX), which is typically highly selective for Cu. The extracted Cu ions are transferred to a separate Cu solution, from which they are harvested in a subsequent electrowinning operation that is not limited by the presence of elements like Co, Ni, Fe or Mn as in the primary solution.

In both cases, the electrowinning operation typically accounts for the removal of the majority, but not all of the Cu, as the decreasing efficiency at lower Cu concentrations is a disadvantage of such processes. Hence, this has to be combined with additional operations to avoid losses of the remaining Cu.

WO2019121086 describes an alternative approach for the removal of Cu and of more noble metals, which is based on selective precipitation by cementation with a reducing agent. Cu in such a process is precipitated in its metallic form. This is typically applied when the quality and value of the Cu product is of less importance, or when low Cu concentrations do not justify the use of a more costly electrowinning-based scheme.

In such a cementation-based operation, the Cu containing solution is brought in contact with a reducing agent such as a more electronegative metallic compound, for example Ni, Co, Fe, Zn, Mn or, alternatively, with hydrogen gas. In the latter case, the operation is often referred to as hydrogen reduction. This is for example described by Togashi and Nagai (Hydrogen reduction of spent copper electrolyte, Hydrometallurgy, 11: p. 149-163, 1983). The effect is a reduction of soluble Cu²⁺ or Cu¹⁺ ions to insoluble elemental copper, e.g., according to:

H₂ + CuSO₄ → Cu°↓ + H₂SO₄

In case a metallic compound is used as reducing agent, this compound ends up in solution, e.g., according to:

Ni° + CuSO₄ → Cu°↓ + NiSO₄

Mn° + 2 CuCl → 2 Cu°↓ + MnCl₂

The elemental copper is precipitated in a solid metallic form. When using an excess of metallic reagent, this can result in an impure cement consisting of a mixture of precipitated copper and unreacted metallic reducing reagent.

Cementation-based operations typically avoid the introduction of oxidizing compounds, such as for example air, oxygen or hydrogen peroxide, into the solutions to be treated. Reason is that oxidizing compounds can either react directly with the reducing reagents, causing them to oxidize without reacting with Cu-ions in solution, or react with elemental Cu that is already precipitated, causing Cu to redissolve. In both cases, the presence of an oxidizing compound will negatively impact the performance of a cementation operation. Consequently, such cementation processes sometimes have to be performed under an inert atmosphere.

GB2011476 describes a multi-step process with a co-precipitation step and a cementation step, which are separated by solid/liquid filtration. A wide variety of oxides, hydroxides, carbonates and bicarbonates may be used as bases in the process, but no metals are used for the neutralization. Iron is not tolerated and therefore avoided or removed in the co-precipitation step together with some copper. The remaining copper is removed by classic cementation from the iron-free solution.

Generally, cementation-based processes have in common that Cu and more noble metals are removed as a metallic cement. Because Fe is less noble, it is normally removed in a separate and different operation.

EP0262964 discloses another option, in which Cu is precipitated as sulfidic compound using sulfide reagents under reducing conditions. Common reagents are H₂S, Na₂S, and NaHS. Similar to cementation, this technique is suitable to bring down Cu to low concentrations.

Neither of the above operations is suitable for treating iron, which is often also present. Therefore, a separate Fe-removal step is required for purification of such Ni and/or Co containing solutions. Sometimes this is done through an ion-exchange processes, but most Fe-removal operations rely on a precipitation of insoluble Fe³⁺ compounds at low free acid concentrations. This is for example explained in Monhemius et al. (The iron elephant: A brief history of hydrometallurgists' struggles with element no. 26, CIM Journal 8(4): p. 197-206, 2017). Such processes use a combination of oxidizing reagents - to promote ferrous to ferric compound conversion - and basic reagents to neutralize free acid, promoting the precipitation of ferric compounds at low free acid concentrations. Common oxidizing reagents are air, O₂, H₂O₂, and Cl₂. Yet also stronger oxidizers can be applied, for example hypochlorite salts, persulfate compounds or permanganate salts. The acid to be neutralized can be present in the feed solution or may be generated during the precipitation reaction of iron. Hydroxides or carbonates are commonly used as neutralization reagents, in particular NaOH, Na₂CO₃, Mg(OH)₂, Ca(OH)₂, CaCO₃, NH₄OH, or (NH4)₂CO₃.

Besides Fe, many other impurities can be present in the feed solution, such as Cr, Al, As, Sb, Sn, W or Cu. These elements can be hydrolyzed and precipitated together with Fe. This is for example mentioned in the above-cited WO2019121086, describing a scheme in which most Cu is first removed by cementation followed by a hydrolysis operation to remove Fe and trace impurities. The hydrolysis operation that is suggested uses sodium hydroxide, lithium hydroxide, ammonia, potassium hydroxide or calcium hydroxide. WO2020212546 discloses a similar operation. Yet in all these cases, additional elements such as K, Ca, Na, Li, or NH₄ are introduced in the solution by the neutralization reagents, which is a clear disadvantage when aiming for high-purity operations.

WO2019090389 presents an approach to avoid the introduction of additional contaminants through compounds for neutralization. As part of a flowsheet to transform a Ni metal powder feed into nickel sulfate solution, a hydrolysis is described for bulk removal of impurities including Fe through neutralization. Ni hydroxide is used as reagent for the neutralization instead of more traditional alkali bases. It is mentioned that in particular sodium or potassium hydroxide bases are avoided as these bases typically leads to alkali contamination. This Ni hydroxide is prepared in a separate operation by precipitating Ni from a part of the refined solution using sodium hydroxide. In this way, sodium is prevented to enter the main flow, but the consumption of sodium hydroxide remains. Despite the use of a Ni-containing feed in the main flow, the additional installation for making nickel hydroxide makes this essentially a two-step process.

In summary, known precipitation processes for Cu-removal typically rely on cementation or on hydrolysis using caustic reagents. Precipitation processes for Fe typically rely on hydrolysis.

When performing a cementation for copper removal, reducing agents are added to convert cupric or cuprous ions into metallic copper. The use of oxidizing agents is avoided to prevent the oxidation and re-dissolution of the cemented compounds. When performing a hydrolysis for Fe and/or Cu removal, oxidizing agents are generally added to avoid the reduction and re-dissolution of Fe, in particular of ferric oxides or hydroxides. These diverging requirements result in a need for two separate process steps to remove the majority of Cu and Fe.

In contrast to the above, the present invention discloses an alternative that involves a single unit operation for the precipitation of Cu and Fe from Ni- and/or Co-bearing solutions. Key of the process is the combined hydrolysis and precipitation of Cu and Fe by using a metallic reagent containing Ni and/or Co, which has reducing properties, for neutralization, in combination with the use of an oxidizing reagent required to promote ferrous to ferric oxidation, all in a single operation. The presented process thus advantageously combines materials and reaction conditions typically not used, or not used in combination. The introduction of additional impurities into the process is restricted or even completely avoided.

Cu-compounds precipitated by hydrolysis under oxidizing conditions are substantially different from the compounds precipitated in a classic cementation-based process under reducing conditions. While in a cementation-based process Cu is removed as a metallic cement product, in the present invention Cu is precipitated in the form of Cu²⁺ compounds. Such compounds can be for example oxides, hydroxides, basic sulphates or basic chlorides. This depends also on the anions in the solution. Precipitation of these Cu-compounds normally occurs at a lower acid concentration as compared to the precipitation of Fe-compounds.

In the present process, the starting solution is assumed to be acidic, as when it provides from a leach operation using acid. A metallic reagent is added with the purpose and effect of consuming acid, not with the purpose of cementation. To this end, the addition of the metallic reagent is combined with the addition of an oxidizer: under these circumstances, no metallic cement is formed. As the pH rises, insoluble hydroxides of specific metals, and in particular those of Fe and Cu, precipitate; other metals such as Ni and/or Co remain at least partially in solution.

This is unlike traditional neutralization and hydrolysis operations, where caustic compounds such as hydroxides of Na, K, Mg, Ca, Li, or ammonia are used, thereby introducing further impurities in the solution.

The present process lends itself to optimization by selecting a metallic reagent containing the elements Ni and/or Co, which dissolve at least partially and thereby upgrade the value of the solution.

The optimized process achieves the best-possible use of the acid remaining after leaching and of the acid generated by the precipitation reactions of Cu and Fe. The acid is indeed efficiently employed for the dissolution of additional Ni and/or Co present in the metallic reagent. No neutralizing reagent is needed and no dilution is caused by adding such an agent.

Applying the proposed hydrolysis operation under oxidizing conditions using metallic reagents or metallic alloys containing Ni and/or Co as a reagent for acid neutralization in order to remove Fe and Cu from leaching solutions has several advantages compared to traditional processes for Fe and/or Cu removal based on hydrolysis.

Traditional hydrolysis processes for Fe-removal also have the disadvantage of introducing additional elements, that are not yet present in the leach solution. Often these elements are introduced as caustic compounds for neutralization. Yet it is also possible that such undesired or even hampering compounds are introduced by the applied oxidizing reagents, for example chlorides when using chlorine as an oxidizing reagent in a sulfate solution, or sulfates when using persulfate salts as an oxidizing reagent in a chloride solution. The introduction of any such elements will often require additional downstream purification operations to prevent them from entering the final product. Otherwise, this can be particularly disadvantageous, for example in battery applications, which require a very high level of purity. Such operations add to the cost and complexity of the overall refining scheme. Another disadvantage is that these elements will increase the total concentration of ions in solution.

Hence, in order to avoid oversaturation and undesired precipitation of solid salt products in such operations, the total concentration of metals in the leach solution would have to be limited or such a solution would have to be diluted, which increases the volumetric flow and reduces the capacity of a given installation. An additional disadvantage is that the net consumption of reagents for neutralization is equivalent to the amounts of Cu and Fe to be removed. Hence, reagent consumption in traditional hydrolysis processes for Fe removal always comes at a cost. In contrast, in a flowsheet configuration that is aiming to transform impure raw materials containing Ni and/or Co into high purity end-products, the use of metallic reagents containing Ni and/or Co, and optionally also Mn, will advantageously contribute to the net capacity by introducing additional Co, Ni, and/or Mn that end up in the end-product. Therefore, in typical Co and Ni refining configurations according to the present invention, the use of Co or Ni as reagent for neutralization is of particular interest because it not only avoids the introduction of additional impurities, but also increases the overall output of highly purified valuable metals. In such a configuration, both the raw material that feeds into the upfront leaching operation and the metal or alloy that is used for neutralization in the hydrolysis operation could be similar or even the same.

It is therefore an object of the present invention to provide a process for the selective precipitation of Cu and Fe from a Ni- and/or Co-bearing solution, whereby a metallic reagent, such as an alloy, is used under oxidizing conditions.

The invention is defined in the appended claims.

According to a first embodiment, the process for the removal of Cu and Fe from an acidic aqueous solution further containing one or more of Ni and Co, comprises the steps of:
- adding a metallic reagent comprising one or more of Ni and Co to the acidic solution, in oxidizing conditions, thereby neutralizing the acidic solution, and forming a precipitate comprising Cu and Fe, wherein at least part of the Cu and Fe is in the form of a hydroxide; and, wherein the metallic reagent is in the form of a metallic powder; and
- separating the Cu and Fe precipitate from the solution, thereby obtaining a solution depleted in Cu and Fe, wherein said metallic powder has a particle size distribution in which the particles have an equivalent particle diameter d90 below 500 µm, or in which the particles have an average equivalent particle diameter d50 below 200 µm.

By "acidic aqueous solution" is meant a solution wherein at least some free acid is present, as for example measured by a titration.

Generally, the incoming solution has a pH below 2, while the process neutralized solution should preferably have a pH above 2. In particular, in H₂SO₄ media, the incoming solution will typically have a pH of less than 3.5, and more preferably of less than 3. The processed neutralized solution should preferably have a pH above 3.5, more preferably above 4.0, and even more preferably above 4.5. In particular, in HCl media, the incoming solution will typically have a pH of less than 2.0, and more preferably of less than 1.5. The processed neutralized solution should preferably have a pH above 2.0, more preferably above 2.2, even more preferably above 2.5, and most preferably above 3.0. The higher the pH of the outgoing flow, the lower the residual concentration of Fe and Cu will be. Nevertheless, a pH of less than 7 is preferred.

Oxidizing conditions are needed for the formation of ferric ions, and to promote the dissolution of the metallic reagent while consuming free acid, effectively neutralizing the solution. Neutralization is important to ensure the precipitation of ferric compounds and cupric or cuprous compounds that show decreasing solubility with increasing pH.

By "metallic reagent" we mean a material in which the bulk of the elements is present in an oxidation state of zero. Besides metallic Ni, Co, and Mn, also other metallic elements can be present, in particular Cu and Fe. The metallic reagent preferably comprises at least 25% by weight of the total of Co and Ni.

On the other hand, mattes or slags, in which the bulk of metals is present in an oxidized state and chemically bound to e.g. sulfur or oxygen, are not considered suitable "metallic reagents" according to the invention.

Apart from Co and Ni, Mn may also advantageously be present in the acidic aqueous solution. Mn is indeed frequently encountered together with Ni and Co, in particular when dealing with materials related to the recycling of batteries ("NMC-batteries").

Contrary to classical cementation, this process produces a residue containing oxidized metal compounds, in particular hydroxides, containing for example Cu²⁺ and Fe³⁺. By "hydroxides" are meant compounds containing one or more OH-groups. These could thus be pure hydroxides, oxyhydroxides, or more complex compounds such as basic sulfates or basic chlorides.

By "depleted in Cu and Fe" is meant a solution with a reduced content of Cu and Fe compared to the acidic aqueous solution, i.e., preferably comprising less than 50% of the Cu, and less than 50% of the Fe present in the acidic aqueous solution. Alternatively, it could be meant solutions with less than 10 g/L of any one of Cu and Fe, preferably with less than 6 g/L, more preferably with less than 1 g/L, even more preferably with less than 500 mg/L, and most preferably with less than 100 mg/L. Higher concentrated solutions are better suited for a process in which a pure Cu product is harvested, while the more preferred or most preferred less concentrated solutions are increasingly suitable for a post-processing e.g. by solvent extraction.

The separation of the Cu and Fe precipitate from the solution can be performed e.g. using decantation, filtration, or centrifugation.

In a further embodiment, the acidic aqueous solution contains HCl or H₂SO₄.

Nevertheless, HNO₃ or other inorganic acids may also be suitable.

In a further embodiment according to any of the preceding ones, the metallic reagent is a metallic alloy.

By "alloy" is meant a mixture of metals retaining the characteristics of metals. Metal chalcogenides, such as matte or slags, are not considered alloys.

In a further embodiment according to any of the preceding ones, the metallic reagent comprising one or more of Ni and Co is essentially free of sulfur.

Sulfur-containing feeds, such as for example compounds known as "mattes" from smelting operations or sulfides precipitated by hydrometallurgical means, are generally not preferred, no matter if they would enter the process via the solid starting material and acidic leaching or via the metallic reagent used in the hydrolysis operation.

The sulfur in such feeds limits the efficiency and applicability of the described process, as it can oxidize to sulfate under the oxidizing conditions, which are essential for the claimed process. Such a sulfur oxidation will consume oxidizing reagent that is introduced for the oxidation of iron, while not consuming free acid to increase the pH of the solution. To compensate for this it would be necessary to add e.g. more neutralizing agent, which is not required in the claimed process. Another potential disadvantage is that a sulfur oxidation introduces sulfates in solutions where this is undesired, for example when refining chloride solutions.

In the invention, said metallic reagent is in the form of a metallic powder. Using a powder increases the reactivity of the reagent, which is advantageous as it enhances the kinetics of the reactions.

As mentioned above, said metallic powder must have a particle size distribution in which the particles have an equivalent particle diameter d90 below 500 µm, or in which the particles have an average equivalent particle diameter d50 below 200 µm. This allows better suspension of the powder and performing the process in common stirred reactors.

In a further embodiment according to any of the preceding ones, the oxidizing conditions are obtained by addition of H₂O₂ and/or an O₂-bearing gas. The O₂-bearing gas can be, for example, air, enriched air or pure O₂-gas. Air has lower potential, and therefore more volume is required. This air volume might even be a disadvantage in some cases, as it introduces cooling. Pure oxygen is stronger oxidizing, and therefore less volume is needed. Peroxide is very strong, thus more efficient per mole, but it is more expensive than the above-mentioned alternatives. The injection of chlorine, for example in the form of Cl₂ gas, may also be used, in particular when the acidic aqueous solution is HCl-based.

In a further embodiment according to any of the preceding ones, the process is performed at atmospheric/ambient pressure. This is a general advantage, as the processes doesn't require elevated pressure or very high temperatures (as for example found in some autoclave setups) to run efficiently. Nevertheless, using an autoclave, e.g. at 15 bar and 180°C, remains a possible alternative.

In a further embodiment according to any of the preceding ones, in the step of adding a metallic reagent, the solution has after neutralizing a pH above 2.0, under the proviso that the acidic aqueous solution contains HCl, or a pH above 3.5, under the proviso that the acidic aqueous solution contains H₂SO₄. The choice of working in HCl media or in H₂SO₄ media can advantageously be adapted e.g. to the kind of metallic reagent and/or the oxidizing agent used in the process.

In a further embodiment according to any of the preceding ones, the metallic reagent is added to the acidic solution in a stoichiometric excess relative to the total of the free acid in said solution and of the acid generated in the precipitation reactions.

The stoichiometric amount of the neutralizing metallic reagent can be estimated from the compositions of the solution and of the metallic reagent, by taking the following reaction schemes into account. The acid balance can be estimated taking the following into account:
1. The starting solution typically contains free acid.
2. Precipitation reactions generally produce acid according to the example formulas below, assuming the presence of dissolved Cu2+ and of Fe3+ in sulfuric media:

   4 CuSO₄ + 6 H₂O → Cu₄(SO₄)(OH)₆ (s)+ 3 H₂SO₄

   Fe₂(SO₄)₃ + 4 H₂O → 2 FeOOH (s) + 3 H₂SO₄

   The hydrolysis of other elements, such as Al, may generate additional acid according to reactions similar to those of Cu and Fe. This supplemental acid should be neutralised by the metallic reagent.
3. Dissolution reactions generally consume acid.

Assuming a M-based metallic reagent, M being one or more bivalent metals such as Ni or Co, with O2 as an oxidizing agent in sulfuric media:

2 M° (s) + O₂ + 2 H₂SO₄ → 2 MSO₄ + 2 H₂O

To reach the intended pH of more than 2 in HCl media, respectively more than 3.5 in H₂SO₄ media, essentially all the free acid needs to be neutralized, i.e., the acid present in the starting solution (1), and the acid from the precipitation reactions (2) is to be consumed by the acid required for the dissolution reactions (3).

When the compositions are known with a fair degree of accuracy, the acid balance can be predicted. In other situations, the skilled person will straightforwardly rely on the measurement of the pH to determine the stoichiometric amount of metallic reagent.

An addition of the metallic reagent beyond stoichiometry is considered to be an excess. Such an excess of reagent may be beneficial to the global process. Excess reagent will report to the residue together with Fe and Cu. The upper limit of the excess is not critical: unreacted metallic reagent will remain undissolved, and this will not impact the purity of the solution depleted in Cu and Fe. In a further embodiment according to any of the preceding ones, the precipitate comprising Cu and Fe also comprises unreacted metallic reagent.

When introducing an excess of metallic reagent, a residual fraction of unreacted metallic reagent can still be present when ending the process, together with the precipitated hydroxide fraction. The unreacted metallic reagent can be separated from the solution. This can be done together with the hydroxide precipitates in a single operation, for example by filtration or decantation. Alternatively, this can also be done in a separate solid liquid separation operation. In this case, the unreacted metallic fraction and the hydroxide fraction can be separated based on a difference in their specific weight, for example by selective decantation or centrifugation. Alternatively, they could be separated selectively based on different magnetic properties. Because the composition and properties of the unreacted metallic reagent and the precipitated hydroxides may be different, a separation of both fractions advantageously allows even different post processing options for each fraction.

In a further embodiment according to any of the preceding ones, the acidic aqueous solution is obtained by performing a step of acidic leaching of solid starting material containing Cu, Fe, and at least one of Ni and Co. Optionally, this can be followed by a step of partial Cu and/or Fe removal.

The leaching step may be operated at a temperature of 50 °C or more. Pressure leaching is also suitable. When leaching with H₂SO₄, the step of acidic leaching preferably delivers an acidic solution having a pH of less than 3.5. When leaching with HCl, the step of acidic leaching preferably delivers an acidic solution having a pH of less than 2.

The leaching step can be oxidizing, using for example H₂O₂ and/or an O₂-bearing gas. Ferric ions may also be used. This will facilitate the oxidation of metallic species to their soluble ionic form. Oxidizing conditions are not needed when the metals in the solid starting material are already in an oxidized form. The optional partial Cu removal may be performed for example by sulfide precipitation, cementation, electrowinning, ion exchange or solvent extraction, thereby removing the bulk of the Cu. The removal of the remaining/residual Cu is then performed according to the first embodiment, as described above.

The optional partial Fe-removal can be done for example by ion exchange, solvent extraction or in a separate hydrolysis operation. This operation is then preferably performed under oxidizing conditions using neutralizing reagents that do not introduce additional impurities in solution. Examples of such reagents are NiCO₃ and Co(OH)₂.

Alternatively, partial Fe-removal may be performed already during the leaching, by only dissolving part of the Fe in the feed and leaving another part in the leach residue. This can be done by controlling the acid supply for the leaching: adding only an under-stoichiometric amount of acid compared to the feed material allows other elements to react first with the acid. These elements will then report to the solution, preferentially over Fe. This is the case for Ni, Co, Mn and Cu. This is promoted by applying oxidizing conditions during leaching, to support the formation of ferric compounds which have a lower solubility compared to ferrous compounds.

A first way to control the acid supply is by an upfront calculation of the acid that is consumed by the other elements. This requires a good knowledge of the composition of the feed. Some uncertainty remains, which may lead to overdosing of acid, resulting in undesired Fe dissolution, or underdosing of acid, resulting in lower dissolution yields for the other elements.

A second way to control the acid supply is by pH control. This is possible when the feed dissolves fast at very low acidity and/or when acid is supplied at a slow rate, so that the acid supply is lagging on the acid consumption. In this way the system is always close to equilibrium and no excess of acid is supplied. When leaching with H₂SO₄, a pH between 1.5 and 3 has been observed to ensure selectivity against Fe. When working with HCl, a pH between 0.5 and 2 has been observed to ensure selectivity against Fe. A disadvantage of this approach is that the overall duration of the leaching can become long because leaching rates are typically low at low acidity.

A third way to control the acid supply is by working in different stages. In a first stage, a first amount of acid is supplied, whereby said first amount is under-stoichiometric with regards to the total amount of metals (excluding Fe) contained in said solid starting material. In a second stage, the reaction is allowed to reach an equilibrium. At the end of this stage essentially all Fe is oxidized to ferric ions and reports to the solid fraction, together with a portion of the other elements. This portion depends on the deficit of acid that is not supplied in the first stage. When working with H₂SO₄, at the end of the second stage, the pH is typically above 2.5, preferably above 3. When working with HCl, at the end of the second stage, the pH is typically above 1, preferably above 2. In a third stage, an additional amount of acid is supplied by pH control. This supply is done at a sufficiently slow rate to avoid an oversupply of acid. The third stage is completed when the target pH is maintained without additional acid supply. When leaching with H₂SO₄, the target pH is between 1 and 3. When working with HCl, the target pH is between 0.5 and 2. A higher pH corresponds to less residual Fe in solution.

Such a "3-step-leaching" - adding a first amount of acid, equilibrium, adding a second amount of acid - has clear advantages:
- reducing the required overall process time;
- flexibility to use metallic reagents of not 100% precisely known composition; and
- avoiding oversupply of acid which would reduce the efficiency of the process,
by precisely controlling only the second addition of acid, while the first (bulk-) addition of acid can be done rather fast and is considered relatively uncritical for the high selectivity and efficiency of the process.

In a further embodiment, the solid starting material is essentially free of sulfur. This is especially the case when leaching in HCl to avoid introducing sulfur as impurity.

In a further embodiment, the Cu and Fe precipitate is at least partly recycled to the step of acidic leaching of solid starting material. This embodiment realizes the above-mentioned recovery of undissolved excess of neutralizing agent. Also, potentially co-precipitated Ni and/or Co is recovered. By addition of this "recycling loop", the loss of potentially valuable metals is minimized.

As an alternative to acidic leaching, the precipitate can be processed in a pyrometallurgical smelting process, serving as valuable feed material.

In a further embodiment, the metallic reagent and the solid starting material have essentially the same composition. Using the same material in the acidic leaching step and in the hydrolysis operation is particularly interesting from a logistic point of view, as for example no separate purchase, storage or upfront treatment is required anymore. Moreover, this combination limits or even avoids the introduction of additional impurities during the process and advantageously contributes to the output of high-purity metals from the presented process.

In a further embodiment, the solid starting material comprises batteries, battery scrap and/or their derived products. The process is suitable for the recovery of metals from batteries, in particular from end-of-life Li-ion batteries, and any kind of production waste originating from the production of those batteries.

The following examples are provided to further illustrate embodiments of the present invention.

### Example 1

A mixed hydroxide product, being an intermediate from primary Co mining, is processed. This product contains 62% moisture and is measured to have the following composition on a dry basis.

| **Element** | **Wt%** |
|---|---|
| Co | 42% |
| Ni | 2.3% |
| Mn | 7.7% |
| Mg | 8.5% |
| Fe | 2.7% |
| Cu | 1.3% |

600 g of the wet product is put into a beaker together with 1 L of water and mixed into a pulp. This pulp is heated to 70 °C. The pH of the pulp is recorded to be above 7. Diluted sulfuric acid (500 g/l H₂SO₄) is pumped into the beaker so that a pH value around 2 is established and maintained while the solids dissolve. When no more acid is consumed in order to maintain the target pH, the pulp is cooled to 40 °C and the solid and liquid fraction are separated by filtration. 1.9 L of leach solution is obtained with a measured composition shown below. A titration reveals a concentration of 14.7 g/L of free H₂SO₄. The solid fraction still contains some Ni, Co and Mn, indicating that the starting material has not completely dissolved under the present leaching conditions.

| **Element** | **Composition (g/l)** |
|---|---|
| Co | 36.8 |
| Ni | 2.1 |
| Mn | 1.1 |
| Mg | 9.8 |
| Fe | 2.8 |
| Cu | 1.4 |

The leaching solution is heated in a beaker to 80 °C. Oxygen gas is injected through a dip pipe into the solution at 100 l/h while intense stirring is applied to ensure a good oxygen dispersion and full suspension of solids. Next, 85 g of a dry atomized NiCoMnCuFe alloy is added. This alloy has the following composition:

| **Element** | **Composition (wt%)** |
|---|---|
| Co | 20 |
| Ni | 46 |
| Mn | 8 |
| Mg | <0.1 |
| Fe | 6 |
| Cu | 23 |

The particle size distribution of the alloy is characterized by a d50 of 110 µm and a d90 of 280 µm. The conditions in the beaker are maintained for 13 hours to let Fe and Cu precipitate. No reagents are added except for demineralized water to compensate for volume losses due to evaporation. Over these 13 hours, the pH is monitored and an increase of the initial value of 2 to a value of 5.1 is observed. Then the pulp is cooled to 40 °C and the solid and liquid fraction are separated by filtration. 1.8 L of solution is obtained, with a composition as shown below.

| **Element** | **Composition (g/l)** |
|---|---|
| Co | 42 |
| Ni | 10 |
| Mn | 3.9 |
| Mg | 10 |
| Fe | <0.001 |
| Cu | 0.023 |

After washing the solid fraction using 2 L of demineralized water, 287 g of wet cake is obtained. The moisture content is measured to be 53% and the composition of the dry fraction is measured as shown below.

| **Element** | **Composition (wt%)** |
|---|---|
| Co | 9 |
| Ni | 18 |
| Mn | 1 |
| Mg | < 0.1 |
| Fe | 8 |
| Cu | 16 |

This example shows how to remove essentially all iron and the bulk of copper by hydrolysis using an NiCoMnCuFe alloy from a solution obtained after leaching a primary Co-feed. This enables further downstream processing of the solution, for example by solvent extraction, to separate cobalt from nickel. The solid fraction obtained in the hydrolysis operation is enriched in Cu and Fe while still containing relevant amounts of Ni and Co. Further processes can be applied to recover this residual Ni, Co, and/or Cu.

This example illustrates that 99.97% of the Fe, and 98% of the Cu present in the starting solution is removed.

### Example 2

A CoNiMnFeCu containing alloy is processed. This alloy is obtained by smelting end of life batteries, followed by atomization into a powder fraction with a particle size distribution measured to have a D50 below 162 µm and a D90 below 361. The composition of this dry alloy is shown below.

| **Element** | **Composition (wt%)** |
|---|---|
| Co | 41 |
| Ni | 7.8 |
| Mn | 2.2 |
| Fe | 23 |
| Cu | 21 |
| Ca | <0.1 |
| Cr | 0.590 |

6110 g of this material is introduced in a 50 L reactor together with 36 L of demineralized water. Intense mixing is applied to suspend the alloy and distribute the oxygen gas that is blown into the reactor using a dip pipe at a rate of 600 L/h. The reactor is heated to 60 °C. Over the next 4 hours, 8300 g of a 78 wt% H₂SO₄ solution is pumped into the reactor at a constant flowrate of 2075 g/h. This is about 90% of the stoichiometric amount required to dissolve Co, Ni, Mn and Cu in the alloy. During the addition, the pH decreases from 5.6 to 1.2. Afterwards the oxygen flow is reduced to 300 L/h and the reactor temperature is increased to 80 °C. These conditions are maintained for another 8 hours, after which the pH has increased to 3.6. Then again, a 78 wt% H₂SO₄ solution is supplied using a pH-based controller and a limiting dosing rate of 500 ml/h. The target pH is set at 2.7. After 3 hours this pH value is reached and essentially no acid is consumed anymore. Another 877 g of 78 wt% H₂SO₄ solution is added in this step. At this point, most of the Ni, Co, Mn and Cu has dissolved while the bulk of Fe has precipitated. Water is added during the entire process to compensate for volume losses due to evaporation, maintaining a total volume of about 40 L. The reactor is cooled to 40 °C and the reaction mixture filtered using a vacuum filter. 37 L of leach solution is obtained after filtration with a measured composition shown below.

| **Element** | **Composition (g/l)** |
|---|---|
| Co | 62 |
| Ni | 12 |
| Mn | 3.2 |
| Fe | 1.5 |
| Cu | 29 |
| Ca | 0.053 |
| Cr | 0.018 |

The composition of the solid residue after drying is measured as shown below.

| **Element** | **Composition (wt% on dry basis)** |
|---|---|
| Co | 6.3 |
| Ni | 1.0 |
| Mn | 0.5 |
| Cu | 6.6 |
| Fe | 43 |

In a next step, the leaching solution is subjected to a copper electrowinning (EW) operation in which the Cu concentration of the solution is reduced to 5.4 g/L, meaning that 23.6 g/L Cu is deposited on the cathode and extracted from the solution. In this operation also a stoichiometric amount of free acid is generated in the solution. After the EW operation, the free H₂SO₄ concentration is measured to be 38 g/L by titration. The full composition after EW is shown below. Note that minor deviations in concentrations of the other elements besides Cu can be explained by a limited accuracy of the analytical techniques, by minor volume losses by evaporation during the EW operation and by possible precipitation in the EW operation.

| **Element** | **Composition (g/l)** |
|---|---|
| Co | 61 |
| Ni | 12 |
| Mn | 2.8 |
| Fe | 1.6 |
| Cu | 5.4 |
| Ca | 0.040 |
| Cr | 0.018 |

30 L of the solution obtained after EW is introduced in a 50 L reactor and heated to 80 °C while oxygen gas is blown into the reactor using a dip pipe at a rate of 600 L/h. Intense mixing is applied. 5726 g of the same CoNiMnFeCu alloy is introduced that was previously also used as the starting material in the leaching step of the current example. The reactor is maintained in this state for 16 hours while adding water to compensate for volume losses due to evaporation. After this time, nearly all free acid is consumed and the pH consequently has increased to a value of 5.0. The pulp is then cooled to room temperature. Agitation and oxygen injection are halted to separate the liquid and solid fractions by decantation. After 24 hours, 20 L of the liquid overflow is removed from the reactor and filtered to remove residual traces of solids. The composition of the liquid is shown below. About 10 L of underflow containing most of the solids and the rest of the leach solution remains in the reactor.

| **Element** | **Composition (g/l)** |
|---|---|
| Co | 83 |
| Ni | 14 |
| Mn | 5.8 |
| Fe | 0.001 |
| Cu | 0.035 |
| Ca | 0.069 |
| Cr | <0.001 |

This example demonstrates how a Co-rich CoNiMnFeCu alloy, obtained by smelting batteries, can be transformed in a purified Co, Ni, and Mn-containing sulfate solution. This is done using a combination of bulk removal operations for both Fe and Cu and use of the hydrolysis operation for removal of residual Cu and Fe according to the invention.

Bulk removal of Fe is done in the leaching operation by limiting the amount of acid that is introduced, resulting a low free acid concentration at the end of the leaching operation. Under these conditions, Ni, Co, Mn and Cu tend to dissolve preferentially over Fe, allowing to separate a large portion of the Fe in the feed to the leaching residue. By allowing some residual Fe in solution after leaching, good selectivity can be achieved and Ni and Co contamination of the leaching cake is limited.

Bulk removal of Cu is done by electrowinning (EW), producing high purity cathodes, with essentially no Ni and Co losses. Because the current efficiency and quality of the Cu cathodes strongly decrease at lower Cu concentrations, EW is not suitable for full depletion of Cu.

Residual amounts of Cu and Fe are removed by the proposed hydrolysis operation using the CoNiMnFeCu alloy feed itself as a reagent in combination with oxygen gas as the oxidizing agent. In this scheme, only sulfuric acid and oxygen are used as reagents besides the feed material, essentially avoiding the introduction of impurities.

### Example 3

The residual fraction from an earlier hydrolysis operation is processed. This is demonstrated for the underflow fraction from example 2 that remains in the reactor after the hydrolysis operation. This is a combination of solution and solids. Based on the analysis provided in example 2, the metal content of this fraction is estimated as shown below.

| **Element** | **Mass (g)** |
|---|---|
| Co | 2518 |
| Ni | 527 |
| Mn | 94 |
| Fe | 1365 |
| Cu | 1364 |

This fraction is the starting material for a new operation and is leached in the same reactor. In order to do so, 25 L of demineralized water is added and mixing is applied to suspend the alloy and distribute the oxygen gas that is blow into the reactor using a dip pipe at a rate of 600 L/h. The reactor is heated to 80 °C. Over the next 16 hours the pH of the pulp is decreased to 2.7 by pumping a 78 wt% H₂SO₄ solution into the reactor. This is done at a maximal rate of 0.5 L/h. Demineralized water is added to compensate for volume losses due to evaporation, maintaining a total volume of about 40 L. After 16 hours, most of the Ni, Co, Mn, Cu and a small portion of Fe has dissolved. The reactor is cooled to 40 °C and the reaction mixture filtered using a vacuum filter. About 38 L of leach solution is obtained after filtration with a measured composition shown below.

| **Element** | **Composition (g/l)** |
|---|---|
| Co | 62 |
| Ni | 13 |
| Mn | 2.0 |
| Fe | 1.4 |
| Cu | 32 |

In a next step, part of the Cu is removed by cementation. To do so, the leach solution is heated in a reactor to 90 °C and well agitated. A nitrogen flow into the headspace of the reactor avoids the introduction of oxygen into the bath. Metallic nickel powder is added in small steps, with intermediate sampling and measurement of the Cu concentration. The pH is stabilized at a value of 2.0 by pumping in a 78 wt% H₂SO₄ solution. It is visually observed that a layer of metallic Cu is cemented on the surface of the Ni powder. Ni powder is added until a residual Cu concentration of 14 g/L is obtained. This is balanced by an increase of the Ni concentration. The composition of the solution is measured again as shown below.

| **Element** | **Composition (g/l)** |
|---|---|
| Co | 60 |
| Ni | 28 |
| Mn | 2.1 |
| Fe | 1.4 |
| Cu | 14 |

2 L of the solution obtained after the cementation operation is introduced in a beaker. Oxygen gas is injected through a dip pipe into the solution at 100 L/h while intense stirring is applied to ensure a good oxygen dispersion and full suspension of solids. 200 g of a dry atomized Ni-rich NiCoCuFe alloy is added. This alloy has a composition as shown below.

| **Element** | **Composition (wt%)** |
|---|---|
| Cu | 22 |
| Fe | 1 |
| Co | 21 |
| Ni | 56 |

The particle size distribution of the alloy is characterized by a d50 of 143 µm and a d90 of 296 µm. The conditions in the beaker are maintained for 8 hours to let Fe and Cu precipitate. No reagents are added except for demineralized water to compensate volume losses due to evaporation. Over these 8 hours, the pH in the beaker is monitored and an increase of the initial value of 2.0 to a value of 5.2 is observed. Then the pulp is cooled to 40 °C and the solid and liquid fractions are separated by filtration. 1.7 L of solution is obtained. The composition is measured as shown below.

| **Element** | **Composition (g/l)** |
|---|---|
| Co | 66 |
| Ni | 35 |
| Mn | 2.0 |
| Fe | <0.001 |
| Cu | 0.01 |

This example shows a way of processing the residual solids and solution from the previous example, recovering Ni, Co and Mn as a mixed sulfate solution free of Fe and with a very low residual Cu-concentration. In this case a large portion of the Cu in the starting material is removed selectively by cementation using Ni-powder. The remaining Cu and all Fe are then removed in the proposed hydrolysis operation using an Ni-rich NiCoCuFe alloy.

### Example 4

A wet impure mixed FeCuNi hydroxide cake is processed. The moisture content is determined at 63% and the metal content of the cake on a dry basis is presented below.

| **Element** | **Composition (wt%)** |
|---|---|
| Cu | 20 |
| Fe | 24 |
| Ni | 9 |

400 g of the wet cake is put into a beaker together with 1.5 L of water and 250 ml of a 36 wt% solution of hydrochloric acid. While mixing, this pulp is heated to 70 °C for 3 hours while demineralized water is added to compensate volume losses due to evaporation, keeping a total volume of 2 L. At this point, visually all solids are dissolved and leaching is completed. A sample is taken and the composition of the liquid is measured. The composition is presented below.

| **Element** | **Composition (g/l)** |
|---|---|
| Ni | 6 |
| Fe | 17 |
| Cu | 15 |

In a next step, Fe and the bulk of Cu are removed from this solution by hydrolysis using a granulated ferronickel alloy. These dry granules have a nearly spherical shape and a diameter between 1 and 4 mm. The composition is shown below.

| **Element** | **Composition (wt%)** |
|---|---|
| Co | 1.2 |
| Cu | <0.1 |
| Fe | 73 |
| Ni | 25 |

308 g of ferronickel granules are added to the glass beaker containing the leach solution. Oxygen is injected at a rate 75 L/h. Mixing is done using a turbine shaped impeller at 500 rpm, ensuring a good homogenization of the liquid and a good distribution of oxygen while avoiding suspension of the granules. The temperature of the solution is increased to 85 °C. These conditions are maintained for 12 hours while demineralized water is added to compensate volume losses due to evaporation. After this period, the pH of the solution has increased from below 0 up to a value of 2.9. Most of the granules are dissolved while suspended solid fines have formed in the beaker. The pulp is then cooled to 40 °C and the solid and liquid fractions are separated by filtration. 1.2 L of solution is recovered, with a composition as shown below.

| **Element** | **Composition (g/l)** |
|---|---|
| Co | 2.6 |
| Cu | 3.2 |
| Fe | 0.01 |
| Ni | 57 |

This example shows how the presented hydrolysis operation can be applied in a chloride-based solution. In this case a mixed hydroxide feed is processed. After leaching of the starting material, a large portion of Cu and nearly all Fe is rejected from the leach solution by neutralization with a ferronickel alloy. In this operation a portion of the Co and Ni in the ferronickel metal is dissolved, essentially replacing Cu and Fe in the leach solution. In this way, the total amount of metals in solution is maintained and dilution is avoided.

### Example 5

181 g CoSO4.7H2O crystals, 311 g NiSO4.6H2O crystals, 16 g MnSO4.H2O crystals, 58 g CuSO4.5H2O crystals and 10 g FeSO4.7H2O crystals are added to 1.60 L of demineralized water in a 3 L beaker. The beaker is equipped with a reflux cooler to avoid volume loss by evaporation. Also 10 g of a concentrated H₂SO₄ (98% solution) is added. The mixture is heated to 80°C while being stirred with a turbine mixer at 700 rpm. After 1 hour, the materials are dissolved, and a leach solution is obtained with the following composition.

| **Element** | **Composition (g/l)** |
|---|---|
| Co | 29 |
| Ni | 50 |
| Mn | 3 |
| Cu | 10 |
| Fe | 1.5 |

The pH of the solution is measured to be 2.6. In a next step, this solution is subjected to a hydrolysis operation using commercially available metallic Ni powder. This powder is > 99.9% pure Ni and has a D50 particle size of 107 µm. 114 g of this powder is added to the beaker, that is kept at 80°C and agitated at 700 rpm for in total 50 hours. Oxidation is done by adding hydrogen peroxide (a commercially available 35% solution). Addition of hydrogen peroxide is controlled by the redox potential of the solution, which is maintained above 400 mV against an Ag/AgCl reference electrode. In total, 356 g of the hydrogen peroxide solution is added.

After 4 hours, the composition of the solution is measured. The Fe concentration has dropped to < 10 mg/l, Cu has decreased to 4.0 g/l. After 25 hours, Fe remains below 10 mg/l while Cu has decreased to 3.4 g/l. After 50 hours, Fe is measured to be 3 mg/l while Cu has decreased to 1.8 g/l. The pH of the solution is measured to be 4.1. The content of the beaker is filtered, and the residue is dried for 16 hours at 105°C. After drying, 128 g of solids are recovered, with a composition as shown below.

| **Element** | **Composition (wt%)** |
|---|---|
| Ni | 69 |
| Cu | 14 |
| Fe | 2.5 |
| Co | <0.1 |
| Mn | <0.1 |

In this case, during hydrolysis, no Cu and Fe are introduced by the metallic reagent, which consists entirely of Ni. Hence the efficiency of removing Cu and Fe from the solution can be calculated as the ratio of the amount of Cu and Fe in the residue over the amount of Cu and Fe in the incoming impure solution. For Cu this ratio equals 80% and for Fe this ratio equals 99.8%.

## Claims

1. Process for the removal of Cu and Fe from an acidic aqueous solution further containing one or more of Ni and Co, comprising the steps of:
- adding a metallic reagent comprising one or more of Ni and Co to the acidic solution, in oxidizing conditions, thereby neutralizing the acidic solution, and forming a precipitate comprising Cu and Fe, wherein at least part of the Cu and Fe is in the form of a hydroxide, and, wherein the metallic reagent is in the form of a metallic powder; and,
- separating the Cu and Fe precipitate from the solution, thereby obtaining a solution depleted in Cu and Fe, wherein said metallic powder has a particle size distribution in which the particles have an equivalent particle diameter d90 below 500 µm, or in which the particles have an average equivalent particle diameter d50 below 200 µm.

2. Process according to claim 1, wherein the acidic aqueous solution contains HCl or H₂SO₄.

3. Process according to claim 1 or 2, wherein the metallic reagent is a metallic alloy.

4. Process according to any one of claims 1 to 3, wherein the metallic reagent is free of sulfur.

5. Process according to any one of claims 1 to 4, wherein the oxidizing conditions are obtained by addition of H₂O₂ and/or an O₂-bearing gas.

6. Process according to any one of claims 1 to 5, wherein the process is performed at atmospheric pressure.

7. Process according to any one of claims 1 to 6, wherein in the step of adding a metallic reagent, the solution has after neutralizing a pH above 2.0, under the proviso that the acidic aqueous solution contains HCl, or a pH above 3.5, under the proviso that the acidic aqueous solution contains H₂SO₄.

8. Process according to any one of claims 1 to 7, wherein the metallic reagent is added to the acidic solution in a stoichiometric excess relative to the total of the free acid in said solution and of the acid generated in the precipitation reactions.

9. Process according to any one of claims 1 to 8, wherein the precipitate comprising Cu and Fe also comprises unreacted metallic reagent.

10. Process according to any one of claims 1 to 9, wherein the acidic aqueous solution is obtained by performing a step of acidic leaching of solid starting material containing Cu, Fe, and at least one of Ni and Co.

11. Process according to claim 10, wherein the precipitate comprising Cu and Fe is at least partially recycled to the step of acidic leaching of solid starting material.

12. Process according to any one of claims 1 to 11, wherein the solid starting material and the metallic reagent have the same composition.

13. Process according to any one of claims 1 to 12, wherein the solid starting material or the metallic reagent comprise batteries, waste batteries, battery scrap and/or waste from the production of batteries.

## Patentansprüche

1. Verfahren für die Entfernung von Cu und Fe aus einer sauren wässrigen Lösung, die ferner eines oder mehrere von Ni und Co enthält, umfassend die Schritte:
- Zugeben eines metallischen Reagenzes, umfassend eines oder mehrere von Ni und Co, zu der sauren Lösung unter oxidierenden Bedingungen, wodurch die saure Lösung neutralisiert wird und eine Ausfällung, umfassend Cu und Fe, ausgebildet wird, wobei mindestens ein Teil des Cu und Fe in der Form eines Hydroxids vorliegt und wobei das metallische Reagenz in der Form eines metallischen Pulvers vorliegt; und
- Abtrennen der Cu- und Fe-Ausfällung von der Lösung, wodurch eine an Cu und Fe verarmte Lösung erhalten wird, wobei das metallische Pulver eine Partikelgrößenverteilung aufweist, bei der die Partikel einen äquivalenten Partikeldurchmesser d90 unter 500 µm aufweisen oder bei der die Partikel einen durchschnittlichen äquivalenten Partikeldurchmesser d50 unter 200 µm aufweisen.

2. Verfahren nach Anspruch 1, wobei die saure wässrige Lösung HCl oder H₂SO₄ enthält.

3. Verfahren nach Anspruch 1 oder 2, wobei das metallische Reagenz eine metallische Legierung ist.

4. Verfahren nach einem der Ansprüche 1 bis 3, wobei das metallische Reagenz frei von Schwefel ist.

5. Verfahren nach einem der Ansprüche 1 bis 4, wobei die oxidierenden Bedingungen durch Zugabe von H₂O₂ und/oder eines O₂-haltigen Gases erhalten werden.

6. Verfahren nach einem der Ansprüche 1 bis 5, wobei das Verfahren unter Atmosphärendruck durchgeführt wird.

7. Verfahren nach einem der Ansprüche 1 bis 6, wobei in dem Schritt des Zugebens eines metallischen Reagenzes die Lösung nach dem Neutralisieren einen pH-Wert über 2,0, unter der Voraussetzung, dass die saure wässrige Lösung HCl enthält, oder einen pH-Wert über 3,5 aufweist, unter der Voraussetzung, dass die saure wässrige Lösung H₂SO₄ enthält.

8. Verfahren nach einem der Ansprüche 1 bis 7, wobei das metallische Reagenz der sauren Lösung in einem stöchiometrischen Überschuss relativ zu der Gesamtmenge der freien Säure in der Lösung und der Säure zugegeben wird, die in den Fällungsreaktionen erzeugt wird.

9. Verfahren nach einem der Ansprüche 1 bis 8, wobei die Ausfällung, umfassend Cu und Fe, ebenso unreagierte metallische Reagenzien umfasst.

10. Verfahren nach einem der Ansprüche 1 bis 9, wobei die saure wässrige Lösung durch das Durchführen eines Schritts eines sauren Auslaugens von festem Ausgangsmaterial erhalten wird, das Cu, Fe und mindestens eines von Ni und Co enthält.

11. Verfahren nach Anspruch 10, wobei die Ausfällung, umfassend Cu und Fe, mindestens teilweise in den Schritt des sauren Auslaugens von festem Ausgangsmaterial zurückgeführt wird.

12. Verfahren nach einem der Ansprüche 1 bis 11, wobei das feste Ausgangsmaterial und das metallische Reagenz die gleiche Zusammensetzung aufweisen.

13. Verfahren nach einem der Ansprüche 1 bis 12, wobei das feste Ausgangsmaterial oder das metallische Reagenz Batterien, Altbatterien, Batterieschrott und/oder Abfälle aus der Batterieproduktion umfassen.

## Revendications

1. Procédé d'élimination de Cu et de Fe d'une solution aqueuse acide contenant en outre un ou plusieurs parmi Ni et Co, comprenant les étapes consistant à :
- ajouter un réactif métallique comprenant un ou plusieurs Ni et Co à la solution acide, dans des conditions d'oxydation, neutralisant ainsi la solution acide, et formant un précipité comprenant du Cu et du Fe, dans lequel au moins une partie du Cu et du Fe est sous forme d'hydroxyde, et, dans lequel le réactif métallique est sous forme de poudre métallique ; et,
- séparer le précipité de Cu et de Fe de la solution, obtenant ainsi une solution appauvrie en Cu et en Fe, dans lequel ladite poudre métallique présente une distribution granulométrique dans laquelle les particules ont un diamètre de particule équivalent d90 inférieur à 500 µm, ou dans laquelle les particules ont un diamètre équivalent moyen d50 inférieur à 200 µm.

2. Procédé selon la revendication 1, dans lequel la solution aqueuse acide contient du HCl ou du H₂SO₄.

3. Procédé selon la revendication 1 ou 2, dans lequel le réactif métallique est un alliage métallique.

4. Procédé selon l'une quelconque des revendications 1 à 3, dans lequel le réactif métallique est exempt de soufre.

5. Procédé selon l'une quelconque des revendications 1 à 4, dans lequel les conditions d'oxydation sont obtenues par ajout de H₂O₂ et/ou d'un gaz contenant de l'O₂.

6. Procédé selon l'une quelconque des revendications 1 à 5, dans lequel le procédé est réalisé à la pression atmosphérique.

7. Procédé selon l'une quelconque des revendications 1 à 6, dans lequel, lors de l'étape d'ajout d'un réactif métallique, la solution a, après neutralisation, un pH supérieur à 2,0, sous réserve que la solution aqueuse acide contienne du HCl, ou un pH supérieur à 3,5, sous réserve que la solution aqueuse acide contienne du H₂SO₄.

8. Procédé selon l'une quelconque des revendications 1 à 7, dans lequel le réactif métallique est ajouté à la solution acide en excès stoechiométrique par rapport au total de l'acide libre dans ladite solution et de l'acide généré dans les réactions de précipitation.

9. Procédé selon l'une quelconque des revendications 1 à 8, dans lequel le précipité comprenant du Cu et du Fe comprend également un réactif métallique qui n'a pas réagi.

10. Procédé selon l'une quelconque des revendications 1 à 9, dans lequel la solution aqueuse acide est obtenue par une étape de lixiviation acide d'une matière première solide contenant du Cu, du Fe et au moins l'un parmi Ni et Co.

11. Procédé selon la revendication 10, dans lequel le précipité comprenant du Cu et du Fe est au moins partiellement recyclé à l'étape de la lixiviation acide du matériau de départ solide.

12. Procédé selon l'une quelconque des revendications 1 à 11, dans lequel le matériau de départ solide et le réactif métallique ont la même composition.

13. Procédé selon l'une quelconque des revendications 1 à 12, dans lequel le matériau de départ solide ou le réactif métallique comprennent des piles, des piles usagées, des déchets de piles et/ou des déchets provenant de la production de piles.
